# EUROPEAN PATENT SPECIFICATION

(11) **EP 3 398 485 B1**
(45) Date of publication and mention of the grant of the patent: **01.01.2020**
(21) Application number: 18169463.9
(22) Date of filing: 26.04.2018
(51) Int. Cl.: A47J 27/21, A47J 27/212

(54) **ELECTRIC KETTLE HAVING TWO HEATING MODES**
WASSERKOCHER MIT ZWEI HEIZUNGSARTEN
BOUILLOIRE ÉLECTRIQUE POSSÉDANT DEUX MODES DE CHAUFFAGE

(30) Priority: 01.05.2017 IL 25205917
(43) Date of publication of application: 07.11.2018
(73) Proprietor: Haroni, Eitan, 46641 Herzliya (IL); Shaa Fasand, Haruny, Herzliya (IL)
(72) Inventor: Haroni, Eitan, 46641 Herzliya (IL); Shaa Fasand, Haruny, Herzliya (IL)
(74) Representative: Robba, Pierpaolo

(56) References cited:
- WO-A1-2004/073466
- WO-A1-2012/061968
- WO-A1-2015/138980
- GB-A- 2 454 009
- maxworldde: "GOURMETmaxx LED-Glaswasserkocher mit Temperaturwahl (09861) | maxx-world.de", www.youtube.com , 1 March 2017 (2017-03-01), XP002782901, Retrieved from the Internet: URL:https://www.youtube.com/watch?v=NRDTQ_ W7FDA [retrieved on 2018-07-10]

## Description

### FIELD OF THE INVENTION

The present invention relates to electric kettles for water or beverages, and still more particularly - to a kettle having two heating modes. This invention may be especially suitable for a clientele who need specific electric utensils to be used in accordance with religious customs.

### BACKGROUND OF THE INVENTION

Various types of electric heaters for heating water and other liquids are known in the art, and are intended for use by the regular civil clientele. Electric kettles are known and used daily to boil water for beverages and cooking. A standard electric kettle for liquids usually has a kettle body and a base for feeding the kettle body with electricity; a standard electric kettle is normally provided with a manually operated electric switch.

GB 2 454 009 A describes an electrically heated domestic water vessel (a kettle) which may be operated in a keep-warm mode, to controllably maintain water in the vessel at a predetermined temperature. The vessel may be provided with internal illumination of the water in the receptacle in any chosen color, to indicate current temperature of the water.

WO2004/000708 discloses an electric kettle with a locking mechanism to releasably connect the base and the heating vessel.

Anybody who uses electric kettles is aware that maintaining the water at a desirable temperature for a long period of time is quite a problem.

Moreover, lifting of the kettle from the base (for example, to use some water) usually stops the heating process.

It should also be noted that there exists a specific circle of users, which comprises people who follow the Judaism traditions by keeping Sabbath (Shabbat, i.e. Saturday) and other Jewish holidays. Such people, inter alia, observe a number of rules of the Jewish religion including those for the holy day of Saturday. Some of the rules will be mentioned specifically for understanding the concept of the invention.

One of the main rules declared for Sabbath (and for some other Jewish holidays) is not performing any work, intentionally or unintentionally. For example, switching electrical devices on/off is considered as work, while opening or closing a water tap is not. Since observant Jews are prohibited both from activating or deactivating electric appliances and from boiling water on Saturday, additional religious guidelines and customs strictly govern how heating of liquids can be still performed.
In order to have warm water under such circumstances, alternative means are required. If many gallons of warm water are required, large thermo-insulated urns may be used for boiling the water in advance to be then utilized in accordance with religious observances. The mentioned prohibitions make using a traditional electric kettle on the Sabbath/holiday impossible. Not only it cannot be switched on/off manually, it also cannot be used as an insulated container since it does not keep water hot for long periods of time, as is necessary for use during a holiday.

Another rule which is valid not only for Sabbath, but has general importance in the Jewish religion, is avoiding the use of food or beverages which are not properly prepared and thus may appear not edible ("not kosher") under the Jewish religious law.

Usually, the people following the Sabbath religious rules try to ensure that the rules are not broken even unintentionally.

To the best of the Applicant's knowledge, there is no information on technical solutions in the prior art for an electrical kettle being simple and regularly looking but suitable for maintaining temperature of the water for a long time. In particular, there are no solutions suitable for the above mentioned clientele so as to technically allow observing the Jewish religious rules in a maximally guaranteed manner.

### SUMMARY OF THE INVENTION

Presented herein is an electric kettle that addresses the above need for a device that keeps water warm for a long time and is usable, for example, in accordance with the religious guidelines and customs of the Jewish Sabbath.

In the present description, the terms "kettle or heater" will be used interchangeably, as well as the terms "water" and "liquid" and the terms "holiday" and "Sabbath", to preserve general character of the statements.

Embodiments of the electric kettle of the present invention have a base for transmitting electricity to the heating element of the kettle, usually via a central electric contact. The embodiments have a boiling mode in order to bring the water to its boiling temperature and a warmer mode that maintains the water at a predefined temperature that is above the ambient air temperature.

The boiling mode is a regular mode which may be selected by manually activating a regular electric switch of the kettle.

The warmer mode may be selected by pressing an additional electric knob (a so-called warmer knob), which may be provided on the kettle. The warmer mode supposes that the water in the kettle may be maintained at a selected temperature, using an internal circuit comprising a thermostat or another temperature controlling circuit.

Depending on the kettle design and/or on the user's preferences, the boiling mode may be automatically followed by the warmer mode.

In addition, embodiments of the present invention may be equipped with a locking mechanism having two positions which respectively correspond to two states of the kettle: unlocked and locked. The positions of the locking mechanism may be manually selectable. In the unlocked state, the kettle is mechanically separate from the base (even if the kettle is placed on the base). In the locked state, the kettle is attached/secured to the base such that the kettle and the base function as a single unit (even when the kettle is lifted by a user, it will be lifted with the base).

In addition, the warmer mode may be initiated by manually selecting a position of the locking mechanism. It can be possible if the temperature controlling circuit serving the warmer mode is designed to be controllable by the locking mechanism.

Still alternatively or in addition, selection of the warmer mode by pressing the additional electric knob, may automatically control the locking mechanism and thus cause securing of the kettle and the base to one another. It can be effected if electro-magnet(s) are provided to secure the kettle to the base whenever the warmer mode knob is pressed.

According to the invention, the locking mechanism and the warmer knob are interconnected by mutual control lines which allows ensuring that the desired warmer regime with the locked kettle will be selected even if only the warmer knob or only the locking mechanism is manually activated by the user. It adds extra-security features to prevent switching the conventional heating element ON/OFF by the user, when it is not desired (say, during Shabbat or another holiday).

According to the invention, when the warmer mode is selected and when the kettle and the base are in the locked position, the base is secured to the kettle and thus the central electric contact there-between remains ON. The user may therefore lift the kettle together with the base from a table, use some water and return the kettle to the table, which action will not disturb the electric contact, so that the warmer mode will continue.

At least the main body of the kettle may be made transparent.

The kettle may be provided with a temperature sensor (for example an infra-red sensor) adapted to provide light indication to allow visually informing the user about condition of the water in the kettle. Actually the temperature sensor allows detecting temperature of the water in the kettle and then indicating at least one preselected temperature value by emitting light of at least one color, respectively.

The sensor may comprise a temperature detecting portion (for example, an infra-red sensor) and a light emitting portion being controlled by the temperature detecting portion.

While the water temperature detecting portion of the sensor should be as close to the water as possible (i.e., may be inside the kettle or on the outer wall of the kettle), the light emitting portion of the sensor may be placed on the outer wall, on the lid or on the handle of the kettle.

If the kettle body is made transparent, the temperature sensor may be positioned so as to illuminate the water in the kettle (either from inside or from outside of the kettle), by the light emitted whenever the temperature in the kettle reaches a preselected value.

Colored light may be produced by the light sensor at any mode of the kettle, and the color may be selected from a number of possible options, for example: the cold or room temperature water may be indicated by a first light color, the pre-selected (warmer) temperature - by a second color, the boiling water - by a third color.

In one specific embodiment, the kettle is transparent, the sensor is installed so as to illuminate the water in the kettle, and one specific temperature is indicated by a specific color of light emitted by the temperature sensor when the water in the kettle reaches that specific temperature.

The kettle according to the present invention may therefore be used in accordance with the religious guidelines and customs as discussed above.

### BRIEF DESCRIPTION OF THE DRAWINGS

The subject matter regarded as the invention will become more clearly understood in light of the ensuing description of embodiments herein, given by way of example and for purposes of illustrative discussion of the present invention only, with reference to the accompanying drawings, wherein
**Fig. 1** is a side view of one embodiment of the invention.
**Fig. 2** provides a perspective elevated view of one embodiment of the present invention.
**Fig. 3** provides a top view to the base of the kettle, illustrating an exemplary embodiment of the locking mechanism.
**Fig. 4** provides a schematic functional diagram of the present invention.
**Fig. 5** provides an alternative functional diagram of the present invention.
**Fig. 6** provides yet another functional diagram of the present invention.
**Fig. 7** illustrates a perspective view of another exemplary embodiment of the present invention, having a transparent body and/or a temperature sensor with colored light emission.

The drawings together with the description make apparent to those skilled in the art how the invention may be embodied in practice.

No attempt is made to show structural details of the invention in more detail than is necessary for a fundamental understanding of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DESCRIPTION OF EMBODIMENTS OF THE INVENTION

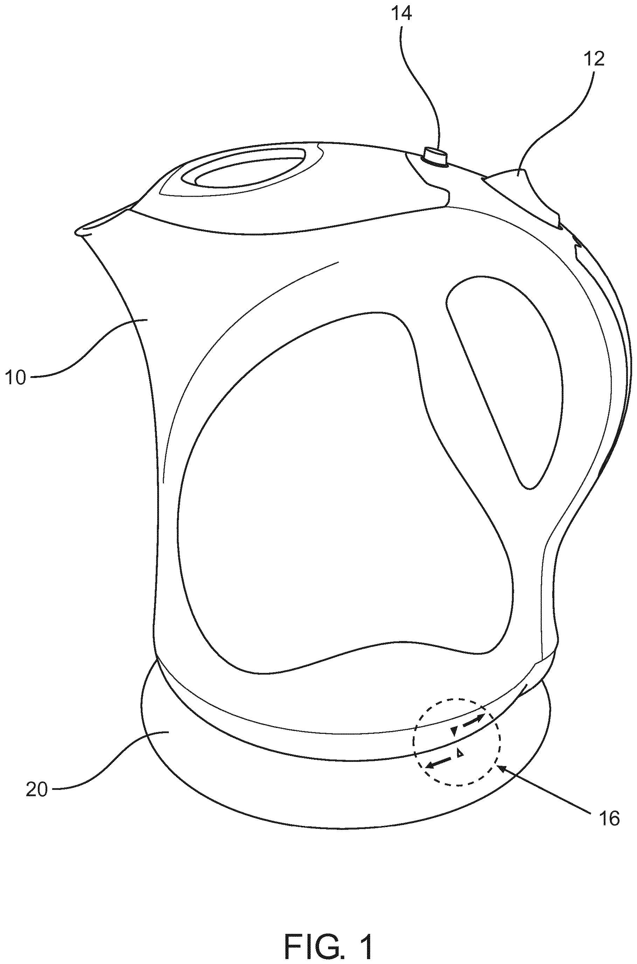

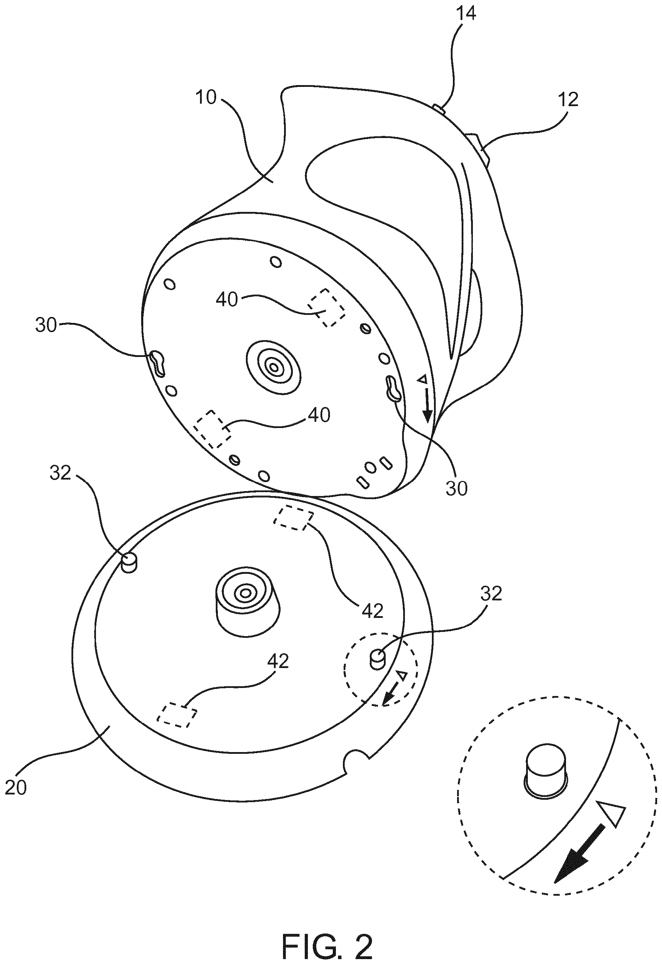

**Figs. 1** **and** **2** present an electric kettle 10 having two heating modes: a regular boiling mode and a warmer mode, for maintaining the liquid in the kettle at a preselected temperature. The kettle 10 is energized via a base 20 having a central contact 22 (See Fig. 2) for feeding a heating element (not shown in these figures) of the kettle 10 with electric power.

The kettle 10 is a novel dual mode kettle which is especially suitable for use in accordance with the religious guidelines and customs previously discussed. The novel function is achieved by equipping kettle 10 of the present invention with a locking mechanism that allows the body of kettle 10 to be secured to its base 20.

In Fig. 1, the locking mechanism is schematically marked by an arrow 16.

One example of such a locking mechanism may be seen in Figure 2. That first example is drawn by solid lines and marked with numerals 30, 32. Another, second example of the locking mechanism is schematically drawn by dotted squares marked with numerals 40 and 42. The locking elements 40 and 42 may secure the kettle body 10 to the base 20 electromagnetically.

The kettle 10 has a main knob 12 for initiating the regular boiling heating mode. Actually, any other switch may be provided for that, for example a main knob on the basis. An additional (warmer) knob 14 may be provided and used for selecting the warmer regime by activating an internal temperature-maintaining electric circuit (not shown in Figs. 1, 2, 3) which controls the heating element of the kettle. Such a circuit may also be called a control circuit or a control unit.

The locking elements 40, 42 may be activated by the warmer knob 14 and/or by slightly turning the base around the kettle to place the locking elements 40, 42 one in front of the other. In other embodiment(s), other type of means (say, another knob or another locking device may be used for clamping the kettle with the basis.

In the present description, the term "embodiment" is an example or implementation of the invention. The various appearances of "one embodiment," "an embodiment" or "some embodiments" do not necessarily all refer to the same embodiments.

Although various features of the invention may be described in the context of a single embodiment, the features may also be provided separately or in any suitable combinations. Conversely, although the invention may be described herein in the context of separate embodiments for clarity, the invention may also be implemented in a single embodiment.

Reference in the specification to "one embodiment", "an embodiment", " some embodiments " or " other embodiments means that a structure, or a characteristics described in connection with the embodiments is included in at least one embodiment, but not necessarily in all embodiments of the invention. It is to be understood that the phraseology and terminology employed herein is not to be construed as limiting and is for descriptive purpose only.

The principles and uses of the teachings of the present invention may be better understood with reference to the accompanying description, figures, and examples.

It is to be understood that the details set forth herein do not construe a limitation to an application of the invention. Furthermore, it is to be understood that the invention can be carried out or practiced in various ways and that the invention can be implemented in embodiments other than the ones outlined in the description below.

It is to be understood that the terms "including", "comprising", "consisting" and grammatical variants thereof do not preclude the addition of one or more components, features, steps, integers or groups thereof and that the terms are not to be construed as specifying components, features, steps or integers.

The phrase "consisting essentially of", and grammatical variants thereof, when used herein is not to be construed as excluding additional components, steps, features, integers or groups thereof but rather that the additional features, integers, steps, components or groups thereof do not materially alter the basic and novel characteristics of the claimed composition, device or method.

If the specification or claims refer to "an additional" element, that does not preclude there being more than one of the additional element.

It is to be understood that where the claims or specification refer to "a" or "an" element, such reference is not to be construed as there being only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" refers to manners, means, techniques and procedures for accomplishing a given task including, but is not limited to those manners, means, techniques and procedures either known to, or readily developed from known manners, means, techniques and procedures by practitioners of the art to which the invention belongs.

The descriptions, examples, methods, and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention can be implemented in the testing or practice with methods and materials equivalent or similar to those described herein.

The terms "bottom", "below", "top" and "above" as used herein do not necessarily indicate that a "bottom" component is below a "top" component, or that a component that is "below" is indeed "below" another component or that a component that is "above" is indeed "above" another component. As such, directions, components or both may be flipped, rotated, moved in space, placed in a diagonal orientation or position, placed horizontally or vertically, or similarly modified. Accordingly, it will be appreciated that the terms "bottom", "below", "top" and "above" may be used herein for exemplary purposes only, to illustrate the relative positioning or placement of certain components, to indicate a first and a second component or to do both.

Embodiments of kettle 10 of the present invention operate according to known in the art technology. That is, kettle 10 may be partially or completely filled with water and placed on base 20, which operatively connects to the heating element (not shown) contained in the body of kettle 10. Selecting the boiling mode enables the heating element to be activated, which in turn, heats the water and brings it to a boil. In this mode, once the water is boiling, an automatic shut off will deactivate kettle 10. If, in addition to selecting the boiling mode, the warmer mode is selected, after the water is brought to a boil, kettle 10 will maintain the water at a predetermined temperature until kettle 10 is turned off.

Alternatively, according to some embodiments, if only the warmer mode is selected, the water may be warmed but not brought to a boil.

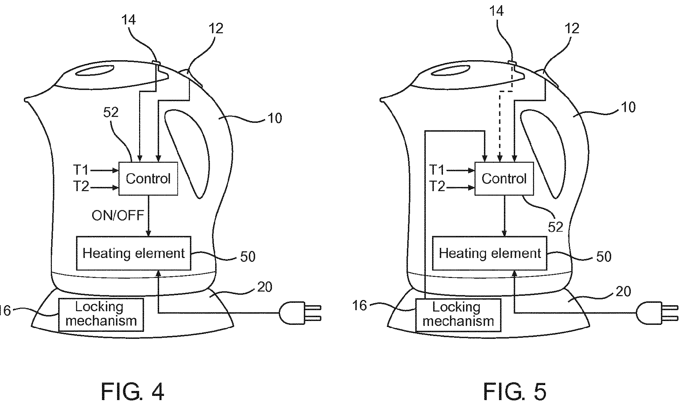

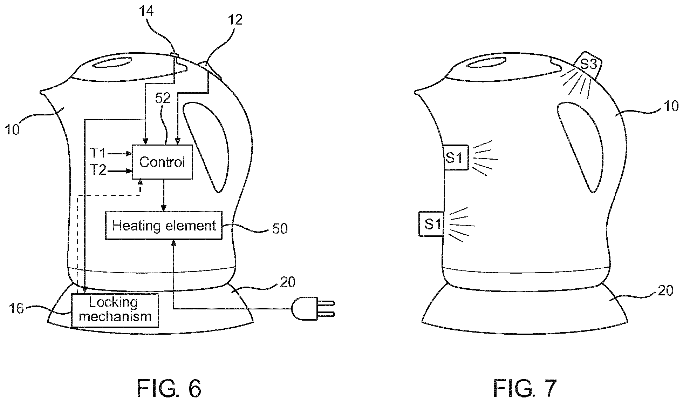

The warmer mode may be selected by pressing the warmer knob 14 which activates a control circuit for controlling the heating element. The control circuit may comprise a thermostat or a different control means (not shown in Figs. 1-2). Other possible ways of selecting the warmer mode will be explained with reference to Figs 5, 6.

As shown in Figs. 1 and 2, kettle 10 of the present invention is further equipped with the above-mentioned locking mechanism 16 that secures base 20 to kettle 10, enabling kettle 10 to be used in accordance with the religious guidelines and customs previously discussed. This locking mechanism has two positions: a locked position, wherein base 20 is secured to the body of kettle 10, and an unlocked position, wherein kettle 10 is free from base 20.

**Fig. 2** shows that the locking mechanism 16 may comprise, for example, at least one rimmed, substantially cylindrical post 32 mounted on base 20 and, for example, a substantially tapered aperture 30 for each corresponding post 32, located on the bottom of kettle 10. Figure 2 shows an example of such a locking mechanism. According to such a configuration, kettle 10 may be seated over base 20, aligning the wide section of apertures 30 over posts 32. When kettle 10 is rotated, posts 32, already positioned within the corresponding apertures 30, move into the narrower area of apertures 30, thereby locking kettle 10 to base 20.

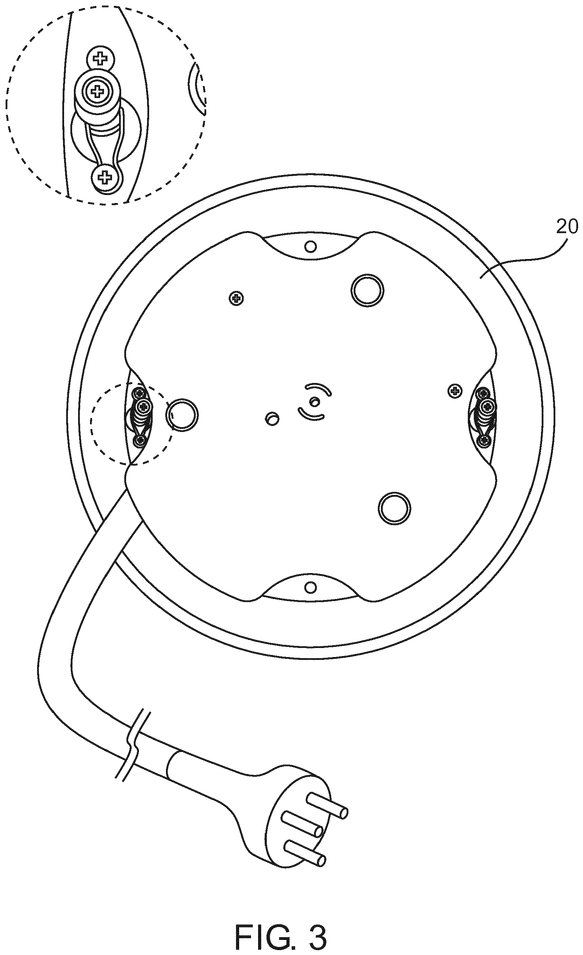

**Fig. 3** shows one alternative embodiment of the locking mechanism. According to some other embodiments, the locking mechanism may have, for example, at least one notched guide tab (encircled by a dotted contour) extending up from base 20 that may be inserted into a corresponding slot on kettle 10. When kettle 10 is rotated over base 20, the guide tabs may slide within the corresponding slots and lock kettle 10 to the base 20.

According to yet other embodiments, the locking mechanism may comprise, for example, at least one clip mounted on the side of base 20 that affixes base 20 to the bottom of kettle 10. Another example of a locking mechanism may comprise, for example, at least one toggle-type latch affixed to the body of kettle 10 that slides into a receiving receptacle on base 20. In addition to the exemplary locking mechanisms presented herein for securing base 20 to kettle 10, other suitable methods may also be used.

As marked in Fig. 2, one additional option may be to configure the locking mechanism 16 as electromagnetic elements 40, 42 which, when placed one in front of another and energized, may secure the kettle 10 to the base 20. It should be noted, that such or similar electromagnetic means may be controlled so as to be locked automatically.

As mentioned above, the warmer mode may be selected and activated by the warmer knob 14. This option is illustrated by the functional diagram shown in **Fig. 4****.** The heating element 50 is fed by electric power from base 20 and controlled by the main knob 12 and the warmer knob 14. A temperature control unit 52 comprises a thermostat or another device (say, a temperature sensor) capable of comparing temperature of the water in the kettle with a preselected temperature) and produces a control signal to the heating element 50, depending on the position of knobs 12, 14 and depending on two temperature values: the target temperature T1 (to be maintained/reached) and the current temperature T2. The locking mechanism 16 may be mechanical, manually operated and may work independently to secure the kettle 10 to the base 20. The user may manually lock the mechanism 16 when the kettle should maintain the predetermined temperature T1, i.e. when the warmer knob 14 is or will be pressed.

However, in addition to the knob 14) the warmer mode will be selected and activated automatically, whenever the kettle 10 is secured to the base 20. Such operation is illustrated in **Fig. 5** which is an alternative functional diagram of the kettle. In this case, the locking mechanism 16 should be configured to produce a control signal to a warmer circuit. For example, the control signal may be produced by the mentioned electromagnetic locking mechanism 40, 42 (see Fig. 2). In another example, a suitable locking mechanism may be universal, i.e. may have conductive contacts which close the control circuit 52 (or close a warmer circuit - not shown), when mechanical parts of the locking mechanism 16 come to close contact with one another.

The warmer knob 14 may be absent, or may exist to produce a spare control signal. Similarly, the locking means 16 may be the above-mentioned universal mechanism comprising not only the conductive elements capable of producing a control signal, but also simple mechanical locking elements. The kettle will be thus double-secured to ensure the desired warmer mode and to exclude any unintentional switching on/off of the kettle by the user.

Still further, **Fig. 6** illustrates that the kettle may be configured so that pressing of the warmer knob 14 would automatically cause locking of the locking mechanism 16 in case the last is made electrically controllable. In case the locking mechanism 16 is also universal (like the warmer knob 14), the kettle of Fig. 6 will also be double-secured. Such an option is illustrated by a dotted arrow from the locking mechanism 16 to the control circuit 52. When each one of the knob 14 and the locking mechanism 16 ensures both the warmer mode and the locking, the kettle will be universally secured.

**Fig. 7** schematically shows an embodiment of the kettle equipped with a temperature sensor S capable of emitting light when a predetermined temperature is reached. The sensor may have a first, temperature sensing portion and a second, light emitting portion, arranged so that the first portion controls the second portion. The temperature sensitive portion of the sensor (say, an infrared sensing element) may be positioned inside the kettle or outside the kettle. The second, light emitting portion of the sensor (say, at least one light emitting diode) may be positioned inside or outside of the kettle. It should be noted that if the kettle body is made transparent, placement of the sensor S is not so important since in any case the sensor will be capable of illuminating water in the kettle, and in any case the user will be able to see the lit kettle through the transparent wall. Fig. 7 shows various options where the light emitting portion of the temperature sensor S is placed in a kettle (S1), on the outer wall (S2) or on the lid (S3). The light emitting portion S1, S2, S3 of the sensor may illuminate the kettle from inside or from outside, if its body is transparent, thus indicating a specific preselected temperature to the user. If the kettle body is not transparent, the sensor may anyway indicate the preselected temperature to the user, by emitting light from the sensor's position on the kettle.

It should be noted that both the temperature sensing portion and the light emitting portion of the sensor may have more than one pre-selected temperatures which can be detected and indicated. In such a case, two or more different temperatures may be detected by the sensor (for example, the boiling temperature and a pre-selected warming temperature), and then - indicated by the light emitting portion of the sensor, using different colors of light (for example, using different light emitting diodes.

While the invention has been described with respect to a limited number of embodiments, these should not be construed as limitations on the scope of the invention, but rather as exemplifications of some of the embodiments. Those skilled in the art will envision other possible variations, modifications, and applications that are also within the scope of the invention. Accordingly, the scope of the invention should not be limited by what has thus far been described, but by the appended claims and their legal equivalents. Therefore, it is to be understood that alternatives, modifications, and variations of the present invention are to be construed as being within the scope of the appended claims.

## Claims

1. An electric kettle having two heating modes, a first or regular mode for heating water and a second or warmer mode for maintaining said water at a predefined temperature, said kettle including a main body (10) and a base (20)for transmitting electricity to a heating element (50) located in the main body, said kettle comprising a circuit (52) for controlling temperature of the water,
the kettle further comprising a locking mechanism (16) capable of connecting between the main body and the base so that when the locking mechanism is in its unlocked position, the main body of the kettle can be separated from the base, and when the locking mechanism (16) is in its locked position, the main body of the kettle is attached to the base,
the kettle being **characterized in that**
in said locked position the main body and the base function as a single unit even when the kettle is lifted by a user;
**in that** the kettle is provided with a main knob (12) for manually initiating the regular mode, and with an additional, warmer electric knob (14) connected to said circuit (52) and intended for manually initiating the warmer mode,
and **in that** the kettle is configured for use in accordance with religious guidelines and customs of the Jewish Saturday by enabling simultaneous use of the warmer mode and the locked position in a manner that:
the locking mechanism (16) and the warmer knob (14) are interconnected by mutual control lines ensuring that a desired warmer regime with the locked kettle will be selected even if only the warmer knob (14) or only the locking mechanism (16) is manually activated by the user.

2. The kettle according to Claim 1, wherein the locking mechanism (16), when manually brought to its locked position, is configured to initiate the warmer mode of the kettle.

3. The kettle according to Claim 1 or 2, wherein the warmer knob (14), when manually brought to initiate the warmer mode, is configured to switch the locking mechanism to (16) its locked position.

4. The kettle according to any one of the preceding claims, wherein the main body (10) is transparent.

5. The kettle according to any one of the preceding claims, equipped with a temperature sensor (S1, S2, S3) capable of visually informing the user about condition of the water in the kettle by emitting light of one or more colors.

6. The kettle according to Claim 5, wherein the main body (10) is transparent, and the temperature sensor (S1, S2, S3) is positioned so as to illuminate the water in the kettle by the light emitted whenever the temperature in the kettle reaches a preselected value.

7. The kettle according to Claim 5, wherein cold or room temperature water is indicated by a first color, water having a pre-selected temperature is indicated by a second color, and boiling water is indicated by a third color.

8. The kettle according to any one of the preceding claims, wherein the locking mechanism (16) includes at least one protruding element (32) on the base (20), said protruding element fitting into a corresponding opening (30) located at the bottom of the main body (10), wherein upon rotating the main body over the base (20), the protruding element is latched within the opening, thereby locking the main body to the base.

9. The kettle according to any one of the claims 1 to 7, wherein the locking mechanism comprises at least one rimmed, substantially cylindrical post (32) mounted on the base (20), that fits into a corresponding substantially tapered aperture (30) located on the bottom of the main body (10) wherein, when the main body is placed over the base, said post seats within the corresponding aperture and when the main body is rotated over the base, said post moves into the narrower area of the corresponding aperture and locks the main body to the base.

10. The kettle according to any one of the claims 1 to 7, wherein the locking mechanism (16) comprises at least one notched guide tab extending up from the base (20) and which is inserted into a corresponding slot on the main body (10) wherein when the main body is rotated, said guide tab slides within the corresponding slot and locks the main body to the base.

11. The kettle according to any one of the claims 1 to 7, wherein the locking mechanism (16) comprises at least one clip mounted on the side of the base (20) that affixes the base to the bottom of the main body (10) of the kettle.

12. The kettle according to any one of the claims 1 to 7, wherein the locking mechanism (16) comprises at least one toggle-type latch affixed to the body (10) of the kettle, wherein the latch slides into a receiving receptacle on the base (20).

## Patentansprüche

1. Elektrischer Wasserkocher mit zwei Heizungsarten, einem ersten oder regulären Heizungsart zum Erhitzen von Wasser und einer zweiten oder Warmhalte-Heizungsart, um das Wasser auf einer vorgegebenen Temperatur zu halten, mit einem Hauptkörper (10) und einem Unterteil (20) zur Übertragung von Elektrizität zu einem im Hauptkörper liegenden Heizelement (50) und mit einer Schaltung (52) zur Temperaturregelung des Wassers, wobei der Wasserkocher ferner einen Sperrmechanismus (16) zwischen dem Hauptkörper und dem Unterteil hat, derart, dass der Hauptkörper des Wasserkochers bei entsperrtem Sperrmechanismus vom Unterteil getrennt werden kann und in Sperrstellung des Sperrmechanismus (16) der Hauptkörper des Wasserkochers am Unterteil befestigt ist,
**dadurch gekennzeichnet, dass** in Sperrstellung der Hauptkörper und das Unterteil eine einzige Einheit bilden, selbst wenn der Wasserkocher von einem Benutzer angehoben wird;
dass der Wasserkocher einen Hauptschalter (12) zum manuellen Starten der regulären Heizungsart und einen zusätzlichen Warmhalteschalter (14) aufweist, der mit der Schaltung (52) verbunden ist und zum manuellen Starten der Warmhalte-Heizungsart dient, und dass der Wasserkocher zur Verwendung nach religiösen Richtlinien und Bräuchen des jüdischen Sabbats ausgebildet ist, indem er die gleichzeitige Verwendung der Warmhalte-Heizungsart und der gesperrten Position derart ermöglicht, dass der Sperrmechanismus (16) und der Warnhalteschalter (14) durch gegenseitige Steuerleitungen miteinander verbunden sind, die ein gewünschtes Erhitzungssystem bei gesperrtem Wasserkocher auch dann gewährleisten, wenn nur der Warmhalteschalter (14) oder nur der Sperrmechanismus (16) manuell vom Benutzer aktiviert wird.

2. Wasserkocher nach Anspruch 1,
**dadurch gekennzeichnet, dass** der Sperrmechanismus (16), wenn er manuell in seine gesperrte Position gebracht wird, so ausgebildet ist, dass er die Warmhalte-Heizungsart des Wasserkochers startet.

3. Wasserkocher nach Anspruch 1 oder 2,
**dadurch gekennzeichnet, dass** der Warmhalteschalter (14), wenn er manuell zum Starten der Warmhalte-Heizungsart gebracht wird, so ausgebildet ist, dass er den Sperrmechanismus (16) in seine verriegelte Position schaltet.

4. Wasserkocher nach einem der vorherigen Ansprüche,
**dadurch gekennzeichnet, dass** der Hauptkörper (10) transparent ist.

5. Wasserkocher nach einem der vorherigen Ansprüche,
**dadurch gekennzeichnet, dass** der Wasserkocher einen Temperatursensor (S1, S2, S3) aufweist, der dem Benutzer visuell den Zustand des Wassers im Wasserkocher durch Ausstrahlen von Licht in einer oder mehrere Farben anzeigt.

6. Wasserkocher nach Anspruch 5,
**dadurch gekennzeichnet, dass** der Hauptkörper (10) transparent und der Temperatursensor (S1, S2, S3) so angeordnet ist, dass das Wasser im Wasserkocher durch das ausgestrahlte Licht beleuchtet wird, sobald die Temperatur im Wasserkocher einen vorgewählten Wert erreicht.

7. Wasserkocher nach Anspruch 5,
**dadurch gekennzeichnet, dass** wobei kaltes Wasser oder Wasser mit Raumtemperatur durch eine erste Farbe, Wasser mit einer vorgewählten Temperatur durch eine zweite Farbe und kochendes Wasser durch eine dritte Farbe angezeigt wird.

8. Wasserkocher nach einem der vorherigen Ansprüche,
**dadurch gekennzeichnet, dass** der Sperrmechanismus (16) auf dem Unterteil (20) mindestens ein vorstehendes Element (32) aufweist, das in eine entsprechende Öffnung (30) am Boden des Hauptkörpers (10) eingreift, wobei durch Drehen des Hauptkörpers auf dem Unterteil (20) das vorstehende Element innerhalb der Öffnung verriegelt ist, wodurch der Hauptkörper am Unterteil gesperrt wird.

9. Wasserkocher nach einem der Ansprüche 1 bis 7,
**dadurch gekennzeichnet, dass** wobei der Sperrmechanismus mindestens einen mit einem Rand versehenen, im Wesentlichen zylinderförmigen Zapfen (32) aufweist, der auf dem Unterteil (20) montiert ist und in eine entsprechende, im Wesentlichen verjüngte und am Boden des Hauptkörpers (10) liegende Öffnung (30) ragt, und dass bei über dem Boden angeordnetem Hauptkörper (10) der Zapfen in der entsprechenden Öffnung sitzt, und dass sich der Zapfen beim Verdrehen des Hauptkörpers gegenüber dem Unterteil in den schmaleren Bereich der entsprechenden Öffnung bewegt und den Hauptkörper mit dem Unterteil verriegelt.

10. Wasserkocher nach einem der Ansprüche 1 bis 7,
**dadurch gekennzeichnet, dass** der Sperrmechanismus (16) mindestens eine mit einer Aussparung versehene Führungslasche aufweist, die über das Unterteil (20) vorsteht und in einen entsprechenden Schlitz des Hauptkörpers (10) eingesetzt ist, und dass die Führungslasche beim Drehen des Hauptkörpers (10) innerhalb des entsprechenden Schlitzes gleitet und den Hauptkörper mit dem Unterteil verriegelt.

11. Wasserkocher nach einem der Ansprüche 1 bis 7,
**dadurch gekennzeichnet, dass** der Sperrmechanismus (16) mindestens eine auf der Seite des Unterteiles (20) befestigte Klammer hat, die das Unterteil am Boden des Hauptkörpers (10) des Wasserkochers befestigt.

12. Wasserkocher nach einem der Ansprüche 1 bis 7,
**dadurch gekennzeichnet, dass** der Sperrmechanismus (16) mindestens einen Kniehebel aufweist, der an dem Körper (10) des Wasserkochers befestigt ist, wobei der Riegel in eine Aufnahme am Unterteil (20) gleitet.

## Revendications

1. Bouilloire électrique ayant deux modes chauffants, un premier mode ou mode normal pour chauffer l'eau et un second mode ou mode réchauffeur pour maintenir ladite eau à une température prédéfinie, ladite bouilloire incluant un corps principal (10) et une base (20) pour transmettre de l'électricité à un élément chauffant (50) situé dans le corps principal, ladite bouilloire comprenant un circuit (52) pour réguler la température de l'eau,
la bouilloire comprenant en outre un mécanisme de verrouillage (16) capable de se connecter entre le corps principal et la base de sorte que lorsque le mécanisme de verrouillage est dans sa position déverrouillée, le corps principal de la bouilloire puisse être séparé de la base, et lorsque le mécanisme de verrouillage (16) est dans sa position verrouillée, le corps principal de la bouilloire soit attaché à la base,
la bouilloire étant **caractérisée en ce que**
dans ladite position verrouillée, le corps principal et la base fonctionnent d'une seule pièce lorsque la bouilloire est soulevée par un utilisateur ;
**en ce que** la bouilloire est pourvue d'un bouton principal (12) pour lancer manuellement le mode normal, et d'un bouton électrique de réchauffeur supplémentaire (14) connecté audit circuit (52) et destiné à lancer manuellement le mode réchauffeur,
et **en ce que** la bouilloire est configurée pour être utilisée conformément à des directives et coutumes religieuses du Shabbat en permettant une utilisation simultanée du mode réchauffeur et de la position verrouillée de manière à ce que :
le mécanisme de verrouillage (16) et le bouton de réchauffeur (14) soient interconnectés par des lignes de régulation mutuelles garantissant qu'un régime de réchauffeur souhaité avec la bouilloire verrouillée sera sélectionné même si uniquement le bouton de réchauffeur (14) ou uniquement le mécanisme de verrouillage (16) est activé manuellement par l'utilisateur.

2. Bouilloire selon la revendication 1, dans laquelle le mécanisme de verrouillage (16), lorsqu'il est amené manuellement à sa position verrouillée, est configuré pour lancer le mode réchauffeur de la bouilloire.

3. Bouilloire selon la revendication 1 ou 2, dans laquelle le bouton de réchauffeur (14), lorsqu'il est amené manuellement à lancer le mode réchauffeur, est configuré pour faire passer le mécanisme de verrouillage (16) à sa position verrouillée.

4. Bouilloire selon l'une quelconque des revendications précédentes, dans laquelle le corps principal (10) est transparent.

5. Bouilloire selon l'une quelconque des revendications précédentes, équipée d'une sonde de température (S1, S2, S3) capable d'informer visuellement l'utilisateur de l'état de l'eau dans la bouilloire en émettant une lumière d'une ou de plusieurs couleurs.

6. Bouilloire selon la revendication 5, dans laquelle le corps principal (10) est transparent, et la sonde de température (S1, S2, S3) est positionnée de façon à illuminer l'eau dans la bouilloire par la lumière émise à chaque fois que la température dans la bouilloire atteint une valeur présélectionnée.

7. Bouilloire selon la revendication 5, dans laquelle une eau à température froide ou ambiante est indiquée par une première couleur, une eau ayant une température présélectionnée est indiquée par une deuxième couleur, et une eau en ébullition est indiquée par une troisième couleur.

8. Bouilloire selon l'une quelconque des revendications précédentes, dans laquelle le mécanisme de verrouillage (16) inclut au moins un élément saillant (32) sur la base (20), ledit élément saillant s'ajustant dans une ouverture correspondante (30) située en bas du corps principal (10), dans laquelle lors d'une rotation du corps principal sur la base (20), l'élément saillant est accroché au sein de l'ouverture, verrouillant ainsi le corps principal sur la base.

9. Bouilloire selon l'une quelconque des revendications 1 à 7, dans laquelle le mécanisme de verrouillage comprend au moins un montant sensiblement cylindrique à rebord (32) monté sur la base (20), qui s'ajuste dans un orifice sensiblement effilé correspondant (30) situé sur le bas du corps principal (10), dans laquelle, lorsque le corps principal est placé sur la base, ledit montant se place au sein de l'orifice correspondant et lorsque le corps principal est mis en rotation sur la base, ledit montant se déplace dans la zone plus étroite de l'orifice correspondant et verrouille le corps principal sur la base.

10. Bouilloire selon l'une quelconque des revendications 1 à 7, dans laquelle le mécanisme de verrouillage (16) comprend au moins une patte de guidage à encoche s'étendant vers le haut depuis la base (20) et qui est insérée dans une fente correspondante sur le corps principal (10), dans laquelle lorsque le corps principal est mis en rotation, ladite patte de guidage coulisse au sein de la fente correspondante et verrouille le corps principal sur la base.

11. Bouilloire selon l'une quelconque des revendications 1 à 7, dans laquelle le mécanisme de verrouillage (16) comprend au moins une pince montée sur le côté de la base (20) qui fixe la base sur le bas du corps principal (10) de la bouilloire.

12. Bouilloire selon l'une quelconque des revendications 1 à 7, dans laquelle le mécanisme de verrouillage (16) comprend au moins un loquet de type à genouillère fixé sur le corps (10) de la bouilloire, dans laquelle le loquet coulisse dans un réceptacle de réception sur la base (20).
